# EUROPÄISCHE PATENTSCHRIFT

(11) **EP 2 933 035 B1**
(45) Veröffentlichungstag und Bekanntmachung des Hinweises auf die Patenterteilung: **30.01.2019**
(21) Anmeldenummer: 14165037.4
(22) Anmeldetag: 16.04.2014
(51) Int. Cl.: B21D 28/22, H01F 41/02, H02K 15/02

(54) **Verfahren und Vorrichtung zur Herstellung eines verklebten Blechpakets**
Method and device for producing a bonded stack of metal sheets
Procédé et dispositif de fabrication d'un paquet de tôles collées

(43) Veröffentlichungstag der Anmeldung: 21.10.2015
(73) Patentinhaber: voestalpine Automotive Components Dettingen GmbH & Co. KG, 72581 Dettingen an der Erms (DE)
(72) Erfinder: Kauffmann, Jochen, 73061 Ebersbach (DE); Bursy, Heinrich, 73268 Erkenbrechtsweiler (DE); Lanksweirt, Jochen, 89522 Heidenheim (DE)
(74) Vertreter: Jell, Friedrich

(56) Entgegenhaltungen:
- DE-A1-102010 054 976
- DE-A1-102011 051 858
- DE-A1-102012 005 795
- US-A1- 2013 160 622

## Beschreibung

Die Erfindung betrifft ein Verfahren und eine Vorrichtung zur Herstellung eines verklebten Blechpakets mit Lagen aus Blechteilen, mit mindestens einem Antrieb, mit einer zum Abtrennen von Blechteilen von einem Blechband vorgesehenen Stanzeinrichtung, die eine drehbar gelagerte, mit einem Antrieb antriebsverbundene Matrize und einen mit der Matrize zusammenwirkenden Stempel aufweist, mit einer mit der Matrize zum Stapeln der abgetrennten Blechteile zu einem Blechpaket zusammenwirkenden Stapeleinrichtung, die einen drehbar gelagerten, wenigstens bereichsweise in der Matrize vorgesehenen Innendorn aufweist, und mit einer Klebeeinrichtung zum Verkleben der gestapelten Blechteile zu einem Blechpaket.

Um ein verklebtes Blechpaket mit Lagen aus Blechteilen herzustellen, ist aus dem Stand der Technik eine Vorrichtung bekannt (EP1269608B1 und US2013160622), die eine Stanzeinrichtung, eine Stapeleinrichtung und eine Klebeeinrichtung aufweist. Die Stanzeinrichtung stanzt aus einem Blechband mit einem Stempel und einer Matrize die Blechteile aus, die in weiterer Folge von der Stapeleinrichtung segmentweise nebeneinander und zu Lagen übereinander geschichtet werden. Um die segmentierten Blechteile nebeneinander anordnen zu können, wird die Matrize über einen Antrieb der Vorrichtung entsprechend der Größe eines Blechteiles weitergedreht. Die Stapeleinrichtung wirkt daher mit der Matrize zusammen. Ist eine segmentierte Lage an Blechteilen geschaffen, wird der Stapel durch einen in der Matrize längs verfahrbaren Gegenhalter abgesenkt, um diesen für eine neue segmentierte Lage an Blechteilen vorzubereiten. Zudem offenbart die Stapeleinrichtung einen in der Matrize vorgesehenen Innendorn, der drehbar gelagert passiv mit dem Blechpaket mitgedreht die Blechpakte in der Matrize positioniert. Zwischen den Lagen des Stapels sind Verbindungselemente vorgesehen. Dies können beispielsweise formschlüssige Verbindungen wie beispielsweise Nietenverbindungen darstellen. Alternativ ist auch eine stoffschlüssige Verbindung mithilfe einer der Stapeleinrichtung nachgeordneten Klebeeinrichtung denkbar. Nachteilig erfordert das Verbinden der Lagen aus Blechteilen einen vergleichsweise hohen Konstruktionsaufwand an der Vorrichtung als auch eine aufwendige Handhabung der Stapel, weil unter anderem gewährleistet bleiben muss, dass die übereinander und nebeneinander ausgerichteten Blechteile bis zu deren festen bzw. stoffschlüssigen Verbindung exakt ausgerichtet bleiben müssen. Dies ist aber reproduzierbar mit einer ausschließlich stoffschlüssigen Verbindung, die Zeit zu seiner ausreichenden Verklebung benötigt, meist nicht erreichbar, sodass bekannte Vorrichtungen bzw. Verfahren auf formschlüssige Verbindungselemente zwischen den Lagen an Blechpaketen nicht verzichten können, insbesondere wenn kurze Taktzeiten bei der Herstellung gefordert sind.

Die Erfindung hat sich daher ausgehend vom eingangs geschilderten Stand der Technik die Aufgabe gestellt, ein Verfahren nach Anspruch 9 und eine Vorrichtung nach Anspruch 1 zur Herstellung eines verklebten Blechpakets zu schaffen, womit auf formschlüssige Verbindungselemente zwischen den Lagen der Blechteile verzichtet und dennoch exakte Blechpakete geschaffen werden können. Zudem sollen kurze Taktzeiten in der Herstellung der Blechpakte und höchste Reproduzierbarkeit erreicht werden, um kostengünstige Blechpakete schaffen zu können.

Die Erfindung löst die gestellte Aufgabe hinsichtlich der Vorrichtung dadurch, dass die Klebeeinrichtung zum Verkleben der in der Matrize befindlichen Blechteile ausgebildet ist und dass der Innendorn mit einem Antrieb zum aktiven Mitdrehen mit der Matrize antriebsverbunden ist.

Ist die Klebeeinrichtung zum Verkleben der in der Matrize befindlichen Blechteile ausgebildet, kann der Stapel bereits in der Matrize einen festen Zusammenhalt ausbilden, wodurch die exakte Positionierung der Blechteile sichergestellt werden kann. Dies kann sowohl bei Blechsegmenten, die einstückig eine Lage des Blechpakets ausbilden, als auch bei segmentierten Lagen aus nebeneinander angeordneten Blechpaketen von von Vorteil sein. Die Klebeeinrichtung kann beispielsweise einen Klebstoff vor dem Abtrennen der Blechteile aufsprühen, wodurch dann die Blechteile in der Matrize verkleben. Auch kann die Klebeeinrichtung mit Aktivierungsmittel den Klebstoff auf den in der Matrize befindlichen Blechteilen zum Kleben anregen bzw. aktivieren. Diese Aktivierung kann vor der Matrize oder auch in der Matrize erfolgen, erfindungsgemäß hat jedoch die Verklebung in der Matrize stattzufinden. Solch eine aktivierte Verklebung kann eine Vorverklebung und/oder ein teilweises oder ganzes Aushärten umfassen. Jegliche Art von Klebestoffen, beispielsweise physikalisch abbindende Klebstoffe, chemisch härtende Klebstoffe und/oder Klebstoffe ohne Verfestigungsmechanismus, sind denkbar. Als Aktivierungsmittel kann beispielsweise eine Heizung, eine andere elektromagnetische Strahlung, ein chemischer Stoff oder dergleichen betrachtet werden. Insbesondere aber kann sich die erfindungsgemäße Vorrichtung dadurch auszeichnen, dass damit selbst Blechpakete mit ausschließlich verklebten Lagen an Blechteilen geschaffen werden können, und zwar dadurch, dass der Innendorn mit einem Antrieb zum aktiven Mitdrehen mit der Matrize antriebsverbunden ist. Der sich somit aktiv mit der Matrize mitdrehende Innendorn kann nämlich die Klebeverbindung beim Weiterdrehen der Matrize entlasten und somit unerwünschte Positionsänderungen an den Blechteilen verursacht durch Trägheitskräfte, bekannt von passiv mitgedrehten Innendornen, vermeiden. Zudem können damit Beschädigungen am Blechpaket durch Relativgeschwindigkeiten zwischen dem Innendorn und dem gedrehten Blechpaket vermieden werden, wodurch keine verminderten elektromagnetischen Eigenschaften am Blechpaket zu befürchten sind. Die erfindungsgemäße Vorrichtung kann daher ein exaktes, dennoch ausschließlich verklebtes Blechpaket mit stets guten elektromagnetischen Eigenschaften schaffen.

Im Allgemeinen wird erwähnt, dass vorzugsweise zwischen den Lagen der Blechteile Klebestoff vorgesehen ist. Bei segmentierten Lagen können die Blechteile formschlüssig miteinander an den Soßen verbunden sein oder stumpf aneinander anschließen. Weiter wird im Allgemeinen erwähnt, dass die Erfindung an den Blechpaketen Wirbelstromverluste erheblich vermeiden kann, weil auf metallische Verbindungselemente, wie aus dem Stand der Technik bekannt, verzichtet werden kann. Dies kann sich insbesondere für Blechpakete für elektrische Maschinen (Stator und/oder Rotor), Dynamobleche etc. auszeichnen. Insbesondere bei schnell laufenden elektrischen Maschinen kann sich das erfindungsgemäße Blechpaket auszeichnen.

Beschädigungen am Blechpaket können weiter reduziert werden, wenn die Stapeleinrichtung einen in der Matrize längs bewegbaren, drehbar gelagerten Gegenhalter aufweist, was zudem eine verminderte elektromagnetische Eigenschaft am Blechpaket vermeiden kann. Der Gegenhalter kann kontinuierlich pulsartig oder dergleichen bewegt werden.

Vorstehendes kann weiter verbessert werden, wenn der Gegenhalter mit einem Antrieb zum aktiven Mitdrehen mit der Matrize antriebsverbunden ist.

Konstruktive Einfachheit an der Vorrichtung kann erreicht werden, wenn die Klebeeinrichtung eine auf die Blechteile thermisch wirkende Heizung aufweist. Zudem ist solch eine Klebeeinrichtung zuverlässig und kostengünstig an der Vorrichtung vorzusehen.

Diese Vorrichtung kann weiter konstruktiv vereinfacht werden, wenn die Heizung thermisch über die Matrize, über den Gegenhalter und/oder über den Innendorn auf die Blechteile in der Matrize wirkt. Insbesondere kann es sich dies für eine besonders gleichmäßige Durchwärmung des zu verklebenden Stapels auszeichnen, parallel über die Matrize, den Gegenhalter und den Innendorn zu erwärmen. Hierzu können Matrize, Gegenhalter und/oder der Innendorn die Heizung tragen bzw. aufweisen. Zudem kann damit der energetische Aufwand zum Erwärmen der Blechteile durch einen unmittelbaren Temperatureintrag in der Nähe der Blechteile reduziert werden. Die Vorrichtung kann daher besonders energieeffizient und damit kostengünstig arbeiten.

Die Verklebung des Blechpakets kann sich verbessern, wenn eine gleichmäßig ansteigende Temperatur in der Klebstoffverbindung zwischen den Lagen erreicht wird, in dem die Heizung in Richtung der dem Stempel abgewandten Seite der Matrize in der Temperatur ansteigend thermisch auf die Blechteile wirkt. Dies kann auch durch in der Temperatur unterschiedliche Temperaturzonen erfolgen.

Weist die Vorrichtung eine Kühlung auf, die auf das dem Stempel zugewandte Matrizenende thermisch wirkt, kann ein Verkleben der Blechteile vor einem Ausstanzen vom Blechband hinten angehalten werden. Dies ist insbesondere von Vorteil, wenn das Blechband mit einem Klebstoff, vorzugsweise Backlack, beschichtete der Vorrichtung zugeführt wird.

Die Positionierung der Blechpakete bei deren Stapelung kann verbessert werden, wenn der Innendorn formschlüssig mit den Blechteilen zusammenwirkbare Verbindungselemente ausbildet. Zudem kann durch die formschlüssige Verbindung die Klebeverbindung zwischen den Lagen an Blechteilen weiter entlastet werden, insbesondere beim Drehen des Stapels.

Die Erfindung löst die gestellte Aufgabe hinsichtlich des Verfahrens dadurch, dass die Blechteile in der Stapeleinrichtung verklebt werden, und dass der Innendorn der Stapeleinrichtung aktiv mit der Matrize mitgedreht wird.

Werden die Blechteile in der Stapeleinrichtung verklebt, kann das Verfahren beschleunigt und kurze Taktzeiten in der Herstellung des Blechpakets eingehalten werden. Zudem kann man damit höchste Formgenauigkeit in der Stapelung der Blechteile erhalten, was der Reproduzierbarkeit des Verfahrens zugutekommen kann. Dies umso mehr, wenn der Innendorn der Stapeleinrichtung aktiv mit der Matrize mitgedreht wird, um beim Zentrieren der Blechteile diese bzw. deren stoffschlüssige Verbindung oder auch die sich noch ausbildende stoffschlüssige Verbindung mechanisch zu entlasten, wenn die Matrize aktiv gedreht wird. Auch kann damit sichergestellt werden, dass der Innendorn die Blechteile nicht beschädigt, was eine Beeinträchtigung der elektromagnetischen Eigenschaften des Blechpakets vermeiden kann. Ein schnelles, exakt arbeitendes und fehlerfreies Verfahren kann damit geschaffen werden.

Durchmessergroße Blechpakete können reproduzierbarer hergestellt werden, wenn mehrere Blechteile nebeneinander zu einer segmentierten Lage und mehrere solcher Lagen, insbesondere zueinander verdreht, übereinander gestapelt werden.

Wirkt die Stapeleinrichtung beim Stapeln der Lagen an Blechteilen mit einem mit der Matrize mitdrehenden und längs bewegbaren Gegenhalter zusammen, kann das Verfahren reproduzierbar auch größere Blechpakete exakt ausbilden. Zudem kann damit der Gegenhalter die gestapelten Blechteile mit gegenüber der Gewichtskraft des Stapels erhöhten Gegendruck belasten, um die Verklebung der Blechteile zu unterstützen.

Einfache Handhabungsverhältnisse zur Verklebung der Blechpakete können sich ergeben, wenn die in der Matrize befindlichen Blechteile erwärmt werden.

Vorstehendes kann weiter erleichtert werden, wenn über die Matrize, den Gegenhalter und/oder den Innendorn die Blechteile erwärmt werden.

Vorzugsweise kann vorgesehen sein, dass von einem mit Klebestoff, insbesondere Backlack, ein- oder zweiseitig beschichtetes Blechband mehrere Blechteile ausgestanzt werden, um die Taktzeit des Verfahrens weiter zu verringern. Dies schließt auch ein, dass das Blechband mithilfe der Vorrichtung beschichtet oder bereits vorbeschichtet der Vorrichtung zugeführt wird.

In den Figuren ist beispielsweise der Erfindungsgegenstand anhand eines Ausführungsbeispiels näher dargestellt. Es zeigen
- Fig. 1: eine teilweise aufgerissene Seitenansicht auf die Vorrichtung,
- Fig. 2: eine abgerissene und vergrößerte Detailansicht der Fig. 1 und
- Fig. 3: eine reduzierte Draufsicht auf die nach Fig. 1 dargestellte Matrize mit Blechpaket und Innendorn.

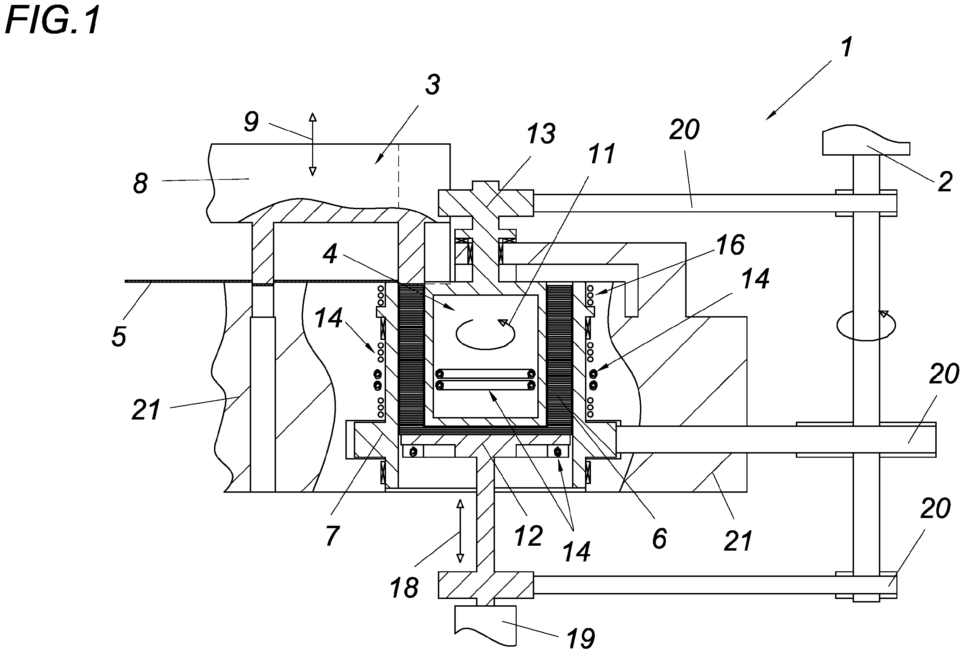

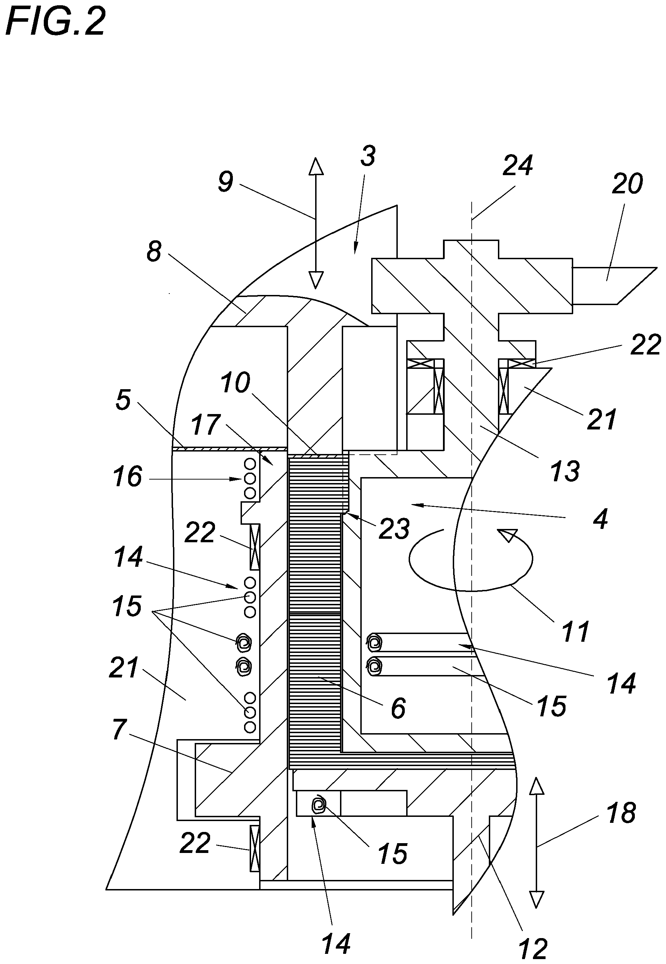

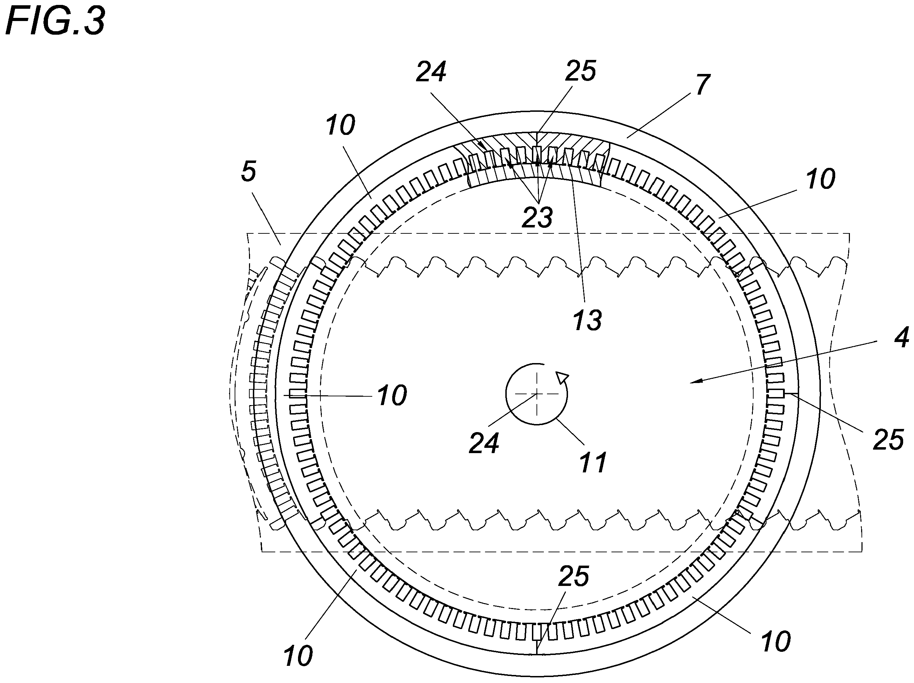

Die beispielsweise gemäß den Figuren 1 und 2 dargestellte erfindungsgemäße Vorrichtung 1 weist im einen Antrieb 2, eine Stanzeinrichtung 3 und eine Stapeleinrichtung 4 auf und fertigt aus einem zugeführten Blechband 5, das bereits mit einem Klebstoff, nämlich Backlack, beschichtet ist, ein verklebtes Blechpaket 6. Der Stanzeinrichtung 3 gehören eine Matrize 7 und ein Stempel 8 zu, der Auf- und Abwärtsbewegung 9 ausführt. Damit wird einerseits das Blechband 5 vorgestanzt und andererseits auch mit der Matrize 7 zum Ausstanzen eines in den Abmessungen fertig ausgebildeten Blechteils 10 zusammengewirkt, was der Figur 2 besser entnommen werden kann. Das ausgestanzte Blechteil 10 wird anschließend in der Matrize 7 mithilfe der Stapeleinrichtung 4 gestapelt. Hierzu werden zunächst Blechteile 10 nebeneinander vorgesehen, in dem der Antrieb 2 der drehbar gelagerten Matrize 7 Blechteile 10 vom Stempel 8 in Drehrichtung 11 wegdreht, bis die Blechteile 10 eine geschlossene Lage ausbilden. Vorzugsweise wird solch eine Lage von vier nebeneinender angeordneten Blechteilen 10 ausgebildet, wie dies nach Fig. 3 zu erkennen ist. Ist eine Lage an Blechteilen 10 komplett, wird ein in der Matrize 7 längs bewegbarer Gegenhalter 12 der Stapeleinrichtung 4 zurückgefahren, um einer neuen Lage an nebeneinander anzuordnenden Blechteilen 10 Platz zu schaffen. Zudem weist die Stapeleinrichtung 4 in der Mitte der Matrize 7 einen Innendorn 13 auf, der ebenso drehbar am Gestell 21 gelagert ist und die Zentrierung bzw. Positionierung der Blechteile 10 unterstützt.

Erfindungsgemäß weist die Vorrichtung 1 Klebeeinrichtung 14 zum Verkleben der in der Matrize 7 befindlichen Blechteile 10 auf. Hierzu ist eine Heizung 15 vorgesehen, die auf die Blechteile 10 thermisch wirkt den Klebstoff aktiviert und damit eine Verklebung zwischen den Lagen der in der Matrize 7 befindlichen Blechteile 10 schafft, in der der Klebstoff auf den Blechteilen 10 aktiviert wird. Alternativ ist vorstellbar, eine Verklebung auch kalt beispielsweise mithilfe eines Zweikomponentenklebstoffs zu schaffen. Die Blechteile 10 werden somit während deren Stapelns bereits stoffschlüssig verbunden bzw. verklebt, was der Formgenauigkeit des Blechpakets 6 besonders dienlich ist. Zudem ist der Innendorn 13 mit einem Antrieb 2 zum aktiven Mitdrehen mit der Matrize 7 antriebsverbunden, um die entstehende Klebeverbindung nicht zu gefährden bzw. damit ein Verschieben der Blechteile 10 zu vermeiden. Die erfindungsgemäße Vorrichtung 1 kann daher ein besonders exaktes und genaues Blechpaket 1 erzeugen.

Die Matrize 7, der Gegenhalter 12 und der Innendorn 13 sind zur Ausbildung dieser Heizung 15 mit diversen Heizmitteln, beispielsweise Heizflüssigkeit führenden Leitungen, elektrische Widerstandsleitung, induktive Heizelemente oder dergleichen versehen. Auch können die Matrize 7, der Gegenhalter 12 und der Innendorn 13 diese Heizung 15 tragen diese, wodurch die Heizung 15 thermisch über die Matrize 7, über den Gegenhalter 12 und über den Innendorn 13 auf die Blechpakte 10 in der Matrize 7 wirken kann.

Die Heizung 15 erzeugt durch eine zunehmende Anzahl an Heizmitteln der Heizung 15 in Richtung der dem Stempel 8 abgewandten Seite der Matrize 7 eine ansteigende Temperatur, was die Klebeverbindung verbessert.

Zudem ist an der Vorrichtung 1 eine Kühlung 16 vorgesehen, die auf das dem Stempel 8 zugewandte Matrizenende 17 thermisch wirkt, um das Ausstanzen des Blechteils 10 nicht zu gefährden.

Der Gegenhalter 12 ist zusätzlich zu seiner Vor- und Zurückbeweglichkeit 18 drehbar gelagert, in dem dieser als Kolbenstange in einem Zylinder 19 endet, der für die Vor- und Zurückbeweglichkeit 18 des Gegenhalters verantwortlich ist. Die Drehbewegung 11 des Gegenhalters 12 wird mit einem Antrieb 2 erzeugt, der diesen aktiv mit der Matrize 7 mitdreht. Je nach Bewegung 18 (kontinuierlich, federnd, gepulst etc.) des Gegenhalters 12 kann die Verklebung zwischen den Blechteilen 10 vorteilhaft beeinflusst werden.

Wie der Fig. 1 in Zusammenhang mit Fig. 2 zu entnehmen, wird ein gemeinsamer Antrieb 2 zum Drehen der Matrize 7, des Gegenhalters 12 und des Innendorns 13 verwendet. Der Antrieb 2 ist mit diesen über jeweils vorgesehene Zahnriemengetriebe 20 verbunden. Daher drehen sich die Matrize 7, der Gegenhalter 12 und der Innendorn 13 um eine gemeinsame Drehachse 24, die gemäß Fig. 2 erkannt werden kann. Zur drehbaren Lagerung der Matrize 7 und des Innendorns 13 sind zwischen diesen und dem Gestell 21 der Vorrichtung jeweils Lager 22 vorgesehen.

Der Innendorn 13 weist -wie in Fig. 2 zu erkennen- formschlüssig in die Blechteile 10 eingreifende Verbindungselemente 23 auf, um die Blechteile 10 beim Drehen der Matrize 7 weiter zu entlasten. Diese Verbindungselemente können beispielsweise in die Zahnlücken der Blechteile formschlüssig eingreifen, wie dies der Fig. 3 besser entnommen werden kann. Im Allgemeinen wird erwähnt, dass jegliche Ausnehmung am Blechteil 10 ausreichen kann, einen Formschluss zwischen Innendorn 13 und Blechteil 10, der Blechteile 10 bzw. dem Blechpaket 6 zu schaffen.

Zudem kann der Fig. 3 entnommen werden, dass die Blechteile 10 in einer Lage nebeneinander auf Stoß 25 angeordnet bzw. gestapelt sind. Im Stoß 25 können die Blechteile ebenso formschlüssige Verbindungen aufweisen, was nach Fig. 3 nicht näher dargestellt worden ist.

## Patentansprüche

1. Vorrichtung zur Herstellung eines verklebten Blechpakets (6) mit Lagen aus Blechteilen (10), mit mindestens einem Antrieb (2), mit einer zum Abtrennen von Blechteilen (10) von einem Blechband (5) vorgesehenen Stanzeinrichtung (3), die eine drehbar gelagerte, mit einem Antrieb (2) antriebsverbundene Matrize (7) und einen mit der Matrize (7) zusammenwirkenden Stempel (8) aufweist, mit einer mit der Matrize (7) zum Stapeln der abgetrennten Blechteile (10) zu einem Blechpaket (6) zusammenwirkenden Stapeleinrichtung (4), die einen drehbar gelagerten, wenigstens bereichsweise in der Matrize (7) vorgesehenen Innendorn (13) aufweist, und mit einer Klebeeinrichtung (14) zum Verkleben der gestapelten Blechteile (10) zu einem Blechpaket (6), wobei die Klebeeinrichtung (14) zum Verkleben der in der Matrize (7) befindlichen Blechteile (10) ausgebildet ist, **dadurch gekennzeichnet, dass** der Innendorn (13) relativ zur Matrize (7) drehbar gelagert ist und dass der Innendorn (13) mit einem Antrieb (2) zum aktiven Mitdrehen mit der Matrize (7) antriebsverbunden ist.

2. Vorrichtung nach Anspruch 1, **dadurch gekennzeichnet, dass** die Stapeleinrichtung (4) einen in der Matrize (7) längs bewegbaren, drehbar gelagerten Gegenhalter (12) aufweist.

3. Vorrichtung nach Anspruch 2, **dadurch gekennzeichnet, dass** der Gegenhalter (12) mit einem Antrieb (2) zum aktiven Mitdrehen mit der Matrize (7) antriebsverbunden ist.

4. Vorrichtung nach Anspruch 1, 2 oder 3, **dadurch gekennzeichnet, dass** die Klebeeinrichtung (14) eine auf die Blechteile (10) thermisch wirkende Heizung (15) aufweist.

5. Vorrichtung nach Anspruch 4, **dadurch gekennzeichnet, dass** die Heizung (15) thermisch über die Matrize (7), über den Gegenhalter (12) und/oder über den Innendorn (13) auf die Blechteile (10) in der Matrize (7) wirkt.

6. Vorrichtung nach Anspruch 4 oder 5, **dadurch gekennzeichnet, dass** die Heizung (15) in Richtung der dem Stempel (8) abgewandten Seite der Matrize (7) in der Temperatur ansteigend thermisch auf die Blechteile (10) wirkt.

7. Vorrichtung nach einem der Ansprüche 1 bis 6, **dadurch gekennzeichnet, dass** die Vorrichtung (1) eine Kühlung (16) aufweist, die auf das dem Stempel (8) zugewandte Matrizenende (17) thermisch wirkt.

8. Vorrichtung nach einem der Ansprüche 1 bis 7, **dadurch gekennzeichnet, dass** der Innendorn (13) formschlüssig mit mindestens einem Blechteil (10) zusammenwirkbare Verbindungselemente (23) ausbildet.

9. Verfahren zur Herstellung eines verklebten Blechpakets (6), bei dem aus einem Blechband (5) mehrere Blechteile (10) durch Zusammenwirken eines Stempels (8) und einer Matrize (7) einer Stanzeinrichtung (3) ausgestanzt werden, die Blechteile (10) mit einer Stapeleinrichtung (4) gestapelt werden, die hierfür einen mit der Matrize zusammenwirkenden Innendorn (13) aufweist, und die Blechteile (10) zu einem Blechpaket (6) verklebt werden, wobei beim Stapeln der Blechteile (10) sowohl die Matrize (7) durch einen Antrieb (2) gedreht als auch der Innendorn (13) gedreht werden, wobei die Blechteile (10) in der Stapeleinrichtung verklebt werden, **dadurch gekennzeichnet, dass** der Innendorn (13) relativ zur Matrize (7) drehbar gelagert ist und dass der Innendorn (13) der Stapeleinrichtung (4) durch einen Antrieb (2) aktiv mit der Matrize (7) mitgedreht wird.

10. Verfahren nach Anspruch 9, **dadurch gekennzeichnet, dass** mehrere Blechteile (10) nebeneinander zu einer segmentierten Lage und mehrere solcher Lagen, insbesondere zueinander verdreht, übereinandergestapelt werden.

11. Verfahren nach Anspruch 9 oder 10, **dadurch gekennzeichnet, dass** die Stapeleinrichtung (4) beim Stapeln der Lagen an Blechteilen (10) mit einem mit der Matrize (7) mitdrehenden und längs bewegbaren Gegenhalter (12) zusammenwirkt.

12. Verfahren nach Anspruch 9, 10 oder 11, **dadurch gekennzeichnet, dass** die in der Matrize (7) befindlichen Blechteile (10) zu deren Verklebung erwärmt werden.

13. Verfahren nach Anspruch 12, **dadurch gekennzeichnet, dass** über die Matrize (7), den Gegenhalter (12) und/oder den Innendorn (13) die Blechteile erwärmt werden.

14. Verfahren nach einem der Ansprüche 9 bis 13, **dadurch gekennzeichnet, dass** von einem mit Klebestoff, insbesondere Backlack, ein- oder zweiseitig beschichtetes Blechband (5) mehrere Blechteile (10) ausgestanzt werden.

## Claims

1. Apparatus for producing a bonded laminated core (6) comprising layers of sheet-metal parts (10), said apparatus having at least one drive (2), a stamping device (3) which is provided for cutting sheet-metal parts (10) from a sheet-metal strip (5) and which comprises a rotatably mounted die (7) that is drive-connected to a drive (2) and a punch (8) that collaborates with the die (7), a stacking device (4) which collaborates with the die (7) in order to stack the cut sheet-metal parts (10) to form a laminated core (6) and which comprises a rotatably mounted inner mandrel (13) provided at least in some regions in the die (7), and a bonding device (14) for bonding the stacked sheet-metal parts (10) to form a laminated core (6), wherein the bonding device (14) is designed to bond the sheet-metal parts (10) located in the die (7), **characterized in that** the inner mandrel (13) is mounted such as to be able to rotate relative to the die (7), and **in that** the inner mandrel (13) is drive-connected to a drive (2) for actively rotating it with the die (7).

2. Apparatus according to claim 1, **characterized in that** the stacking device (4) has a rotatably mounted counter-holder (12) which is able to move longitudinally in the die (7).

3. Apparatus according to claim 2, **characterized in that** the counter-holder (12) is drive-connected to a drive (2) for actively rotating it with the die (7).

4. Apparatus according to claim 1, 2 or 3, **characterized in that** the bonding device (14) has a heating means (15) which acts thermally on the sheet-metal parts (10).

5. Apparatus according to claim 4, **characterized in that** the heating means (15) acts thermally on the sheet-metal parts (10) in the die (7) via the die (7), via the counter-holder (12) and/or via the inner mandrel (13).

6. Apparatus according to claim 4 or 5, **characterized in that** the heating means (15) acts thermally on the sheet-metal parts (10) with a temperature that rises in the direction of the side of the die (7) facing away from the punch (8).

7. Apparatus according to one of claims 1 to 6, **characterized in that** the apparatus (1) has a cooling means (16) which acts thermally on the die end (17) facing towards the punch (8).

8. Apparatus according to one of claims 1 to 7, **characterized in that** the inner mandrel (13) forms connecting elements (23) which can collaborate in a form-fitting manner with at least one sheet-metal part (10).

9. Method for producing a bonded laminated core (6), in which a plurality of sheet-metal parts (10) are stamped out of a sheet-metal strip (5) by the collaboration of a punch (8) and a die (7) of a stamping device (3), the sheet-metal parts (10) are stacked by a stacking device (4) which to this end has an inner mandrel (13) that collaborates with the die, and the sheet-metal parts (10) are bonded to form a laminated core (6), wherein, during the stacking of the sheet-metal parts (10), both the die (7) is rotated by a drive (2) and the inner mandrel (13) is rotated, the sheet-metal parts (10) being bonded in the stacking device, **characterized in that** the inner mandrel (13) is mounted such as to be able to rotate relative to the die (7), and **in that** the inner mandrel (13) of the stacking device (4) is actively rotated with the die (7) by a drive (2).

10. Method according to claim 9, **characterized in that** a plurality of sheet-metal parts (10) are stacked next to one another to form a segmented layer, and a plurality of such layers are stacked on top of one another, more particularly in a manner rotated relative to one another.

11. Method according to claim 9 or 10, **characterized in that** the stacking device (4), when stacking the layers of sheet-metal parts (10), collaborates with a counter-holder (12) which rotates with the die (7) and which is movable in the longitudinal direction.

12. Method according to claim 9, 10 or 11, **characterized in that** the sheet-metal parts (10) located in the die (7) are heated for bonding purposes.

13. Method according to claim 12, **characterized in that** the sheet-metal parts are heated via the die (7), the counter-holder (12) and/or the inner mandrel (13).

14. Method according to one of claims 9 to 13, **characterized in that** a plurality of sheet-metal parts (10) are stamped out of a sheet-metal strip (5) which is coated on one or two sides with an adhesive, more particularly a baking enamel.

## Revendications

1. Dispositif pour la fabrication d'un paquet de tôles (6) collé avec de couches de pièces de tôle (10), avec au moins un entraînement (2), avec une installation de découpe (3) prévue pour découper des pièces de tôle (10) dans un feuillard de tôle (5), qui comporte une matrice (7) supportée avec possibilité de rotation et en liaison motrice avec un entraînement (2) et un poinçon (8) coopérant avec la matrice (7), avec une installation d'empilage (4) coopérant avec la matrice (7) pour empiler les pièces de tôle (10) découpées pour former un paquet de tôles (6), qui présente un mandrin intérieur (13) supporté avec possibilité de rotation et prévu au moins en partie dans la matrice (7), et avec une installation de collage (14) pour le collage des pièces de tôle (10) empilées pour former un paquet de tôles (6), l'installation de collage (14) étant conçue pour coller les pièces de tôle (10) qui se trouvent dans la matrice (7), **caractérisé en ce que** le mandrin intérieur (13) est supporté avec possibilité de rotation par rapport à la matrice (7) et **en ce que** le mandrin intérieur (13) est en liaison motrice avec un entraînement (2) en vue d'un entraînement en rotation actif avec la matrice (7).

2. Dispositif selon la revendication 1, **caractérisé en ce que** l'installation d'empilage (4) présente un contre-appui (12) disposé dans la matrice (7) de façon mobile longitudinalement et supporté avec possibilité de rotation.

3. Dispositif selon la revendication 2, **caractérisé en ce que** le contre-appui (12) est en liaison motrice avec un entraînement (2) en vue d'un entraînement en rotation actif avec la matrice (7).

4. Dispositif selon la revendication 1, 2 ou 3, **caractérisé en ce que** l'installation de collage (14) présente un chauffage (15) exerçant une action thermique sur les pièces de tôle (10).

5. Dispositif selon la revendication 4, **caractérisé en ce que** le chauffage (15) exerce une action thermique par l'intermédiaire de la matrice (7), du contre-appui (12) et/ou du mandrin intérieur (13) sur les pièces de tôle (10) dans la matrice (7).

6. Dispositif selon la revendication 4 ou 5, **caractérisé en ce que** le chauffage (15) exerce une action thermique sur les pièces de tôle (10) à une température qui augmente en direction du côté de la matrice (7) opposé au poinçon (8).

7. Dispositif selon l'une des revendications 1 à 6, **caractérisé en ce que** le dispositif (1) présente un refroidissement (16) qui exerce une action thermique sur l'extrémité de la matrice (17) tournée vers le poinçon (8).

8. Dispositif selon l'une des revendications 1 à 7, **caractérisé en ce que** le mandrin intérieur (13) forme, en engagement positif avec au moins une partie de tôle (10), des éléments de liaison (23) qui peuvent coopérer ensemble.

9. Procédé pour la fabrication d'un paquet de tôles (6) collé, dans lequel plusieurs pièces de tôle (10) sont découpées dans un feuillard de tôle (5) par la coopération d'un poinçon (8) et d'une matrice (7) d'une installation de découpe (3), les pièces de tôle (10) sont empilées avec une installation d'empilage (4) qui présente pour cela un mandrin intérieur (13) coopérant avec la matrice et les pièces de tôle (10) sont collées pour former un paquet de tôles (6), dans lequel la matrice (7) est tournée par un entraînement (2) lors de l'empilage des pièces de tôle (10) et le mandrin intérieur (13) étant également tourné, dans lequel les pièces de tôle (10) sont collées dans l'installation d'empilage, **caractérisé en ce que** le mandrin intérieur (13) est supporté avec possibilité de rotation par rapport à la matrice (7) et **en ce que** le mandrin intérieur (13) de l'installation d'empilage (4) est entraîné en rotation activement avec la matrice (7) par un entraînement (2).

10. Procédé selon la revendication 9, **caractérisé en ce que** plusieurs pièces de tôle (10) sont empilées les unes à côté des autres pour former une couche segmentée et plusieurs de ces couches sont empilées les unes par-dessus les autres, en particulier en les tournant les unes par rapport aux autres.

11. Procédé selon la revendication 9 ou 10, **caractérisé en ce que** l'installation d'empilage (4) coopère, lors de l'empilage des couches de pièces de tôle (10), avec un contre-appui (12) qui tourne avec la matrice (7) et peut être déplacé longitudinalement.

12. Procédé selon la revendication 9, 10 ou 11, **caractérisé en ce que** les pièces de tôle (10) qui se trouvent dans la matrice (7) sont chauffées en vue de leur collage.

13. Procédé selon la revendication 12, **caractérisé en ce que** les pièces de tôle sont chauffées par l'intermédiaire de la matrice (7), du contre-appui (12) et/ou du mandrin intérieur (13).

14. Procédé selon l'une des revendications 9 à 13, **caractérisé en ce que** plusieurs pièces de tôle (10) sont découpées dans un feuillard de tôle (5) revêtu d'adhésif, en particulier de émail de cuisson, sur une face ou les deux.
